# EUROPEAN PATENT SPECIFICATION

(11) **EP 3 104 645 B1**
(45) Date of publication and mention of the grant of the patent: **18.04.2018**
(21) Application number: 16167326.4
(22) Date of filing: 05.07.2012
(51) Int. Cl.: H04W 28/16, H04W 8/12, H04W 88/12, H04W 88/14, H04W 28/02

(54) **DIFFERENTIATION OF PRIVATE AND STANDARD SERVICE-CLASS-INDICATORS**
DIFFERENZIERUNG VON PRIVATEN UND STANDARD SERVICE-CLASS-INDICATORS
DIFFÉRENTIATION DE SERVICE-CLASS-INDICATORS PRIVÉS ET STANDARD

(43) Date of publication of application: 14.12.2016
(62) Divisional of application: 12880595.9
(73) Proprietor: Huawei Technologies Co., Ltd., Longgang District Shenzhen, Guangdong 518129 (CN)
(72) Inventor: LU, Wei, Shenzhen Guangdong 518129 (CN); QI, Caixia, Shenzhen Guangdong 518129 (CN); ZHU, Fenqin, Shenzhen Guangdong 518129 (CN)
(74) Representative: Pfenning, Meinig & Partner mbB

(56) References cited:
- EP-A1- 2 151 984

## Description

### TECHNICAL FIELD

The present invention relates to mobile communications technologies, and in particular, to a service packet processing method and a device.

### BACKGROUND

In a mobile communications network, a mobile station (Mobile Station, MS) may access the Internet by using a general packet radio service (General Packet Radio Service, GPRS). A packet at an application layer can be transferred between the MS and a server on the Internet by using a base station subsystem (Base Station Subsystem, BSS), a serving GPRS support node (Serving GPRS Support Node, SGSN), and a gateway GPRS serving node (Gateway GPRS Serving Node, GGSN), where the BSS includes a base transceiver station (Base Transceiver Station, BTS) and a base station controller (Base Station Controller, BSC). The SGSN sends current service class indicator (service class indicator, SCI) of the MS to the BSC, the BSC performs corresponding processing according to the SCI; an actual processing manner is not involved herein, the BSC may allocate different channel encoding, and the like, and such a mechanism may be referred to as a specific radio resource management treatment (Specific Radio Resource Management treatment) mechanism. In the present invention, for ease of description, such a mechanism is collectively referred to as specific radio resource management.

Processing of a UE in a GPRS system is described above, and processing of a UE in UTRAN (UMTS Terrestrial Radio Access network, UMTS terrestrial radio access network) and E-UTRAN (Evolved UTRAN, evolved UTRAN system) systems also has the same problem.

For a same service, different operators may define different service class indicators SCIs. For ease of description, in the present invention, the SCI is referred to as an SCI value, for example, the China Mobile defines an SCI value of a QQ service as 5, and the China Unicom defines the SCI value of the QQ service as 8. Alternatively, SCI values of a part of services may be standardized, for example, a VOICE service and the like are standardized, the standardized SCI values may be referred to as standard SCI values, and different operators use same standard SCI values; however, in addition to standardized services, the operators may also have services defined by themselves, where SCI values corresponding to the services may be referred to as private SCI values.

Regardless of whether different operators define different SCI values or the different operators have private SCI values, a BSC is required to correctly identify a service class to correctly process a packet. Alternatively, in addition to standardized service classes, the operators more finely define a part of service classes. For example, an SCI is standardized for an IM class (QQ\MSN) service, for example, "1", and in addition to that, an operator additionally defines a private SCI value for a QQ service or an MSN service, for example, the SCI value of the previously described QQ service is "5".

In the prior art, in order to enable a BSC identifying an SCI value correctly, an SCI value list corresponding to each public land mobile network (Public Land Mobile Network, PLMN) may be configured on the BSC; but in situations of roaming and network sharing, the configured SCI value list is enormous, which causes unstable processing on the BSC. In addition, for a roaming subscriber, the BSC cannot learn whether specific radio resource management is to enabled or whether a private SCI value is to be used; as a result, a service packet cannot be correctly processed.

EP2151984A provides a communication device, a communication system, and a restricting method permitting a communication restriction for each service class. A user equipment 100 has a memory unit 102 which stores service class information showing correspondence between service classes indicative of available communication services, and service class codes to discriminate the service classes. A notice information transmitting unit 101 then receives a restriction message indicative of a service class number from an RNC 200. When the restriction message including the service class number is received, a restricting unit 104 specifies a service class corresponding to the service class number stored in the memory unit 102 and implements a communication restriction in the service class on a communication processing unit 105.

### SUMMARY

In view of this, embodiments of the present invention provide a service packet processing method and a core network, so as to solve the problems that a configuration amount on a BSC is large, and how a service packet is processed cannot be learned. The present invention is as defined in the appended independent claims. Further implementations are disclosed in the appended dependent claims, description and figures.

Through the foregoing technical solutions, service class information sent by a core network is received, so that service class information of a plurality of operators does not need to be configured on an access network control device, a configuration amount is reduced, and the stability of an access network is improved; and indication information of the core network is determined, and how a service packet is processed can be learned according to the indication information, so that the service packet is correctly processed.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show some embodiments of the present invention, and persons of ordinary skill in the art may still derive other drawings from these accompanying drawings without creative efforts.
FIG. 1 is a schematic flowchart of a service packet processing method according to an embodiment of the present invention;
FIG. 2 is a schematic diagram of an application scenario according to an embodiment of the present invention;
FIG. 3 is a schematic flowchart of a service packet processing method according to an embodiment of the present invention;
FIG. 4 is a schematic flowchart of a service packet processing method according to an embodiment of the present invention;
FIG. 5 is a schematic flowchart of indication information acquisition according to an embodiment of the present invention;
FIG. 6 is a schematic flowchart of indication information acquisition according to an embodiment of the present invention;
FIG. 7 is a schematic flowchart of indication information acquisition according to an embodiment of the present invention;
FIG. 8 is a schematic flowchart of indication information acquisition according to an embodiment of the present invention;
FIG. 9 is a schematic flowchart of a service packet processing method according to an embodiment of the present invention;
FIG. 10 is a schematic flowchart of a service packet processing method according to an embodiment of the present invention;
FIG. 11 is a schematic structural diagram of a service packet processing device according to an embodiment of the present invention; and
FIG. 12 is a schematic structural diagram of an access network control device according to an embodiment of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are a part rather than all of the embodiments of the present invention. All other embodiments obtained by persons of ordinary skill in the art based on the embodiments of the present invention without creative efforts shall fall within the protection scope of the present invention.

In the embodiments of the present invention, a GPRS system is used as an example for description. The present invention may also be applied to UTRAN and E-UTRAN systems, where an SGSN used as a mobility management network element corresponds to an MME (Mobility Management Entity, mobility management entity) of the E-UTRAN system, and a GGSN used as a gateway device corresponds to a P-GW (PDN Gateway, PDN gateway) of the E-UTRAN system.

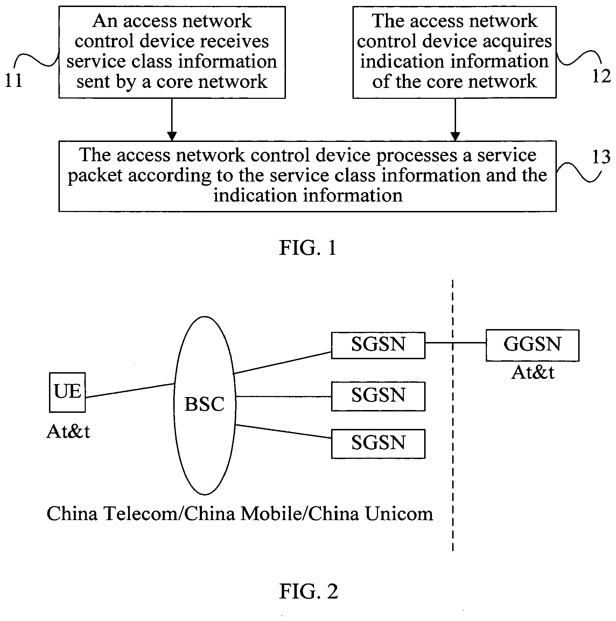

FIG. 1 is a schematic flowchart of a service packet processing method according to an embodiment of the present invention, including:
Step 11: An access network control device receives service class information (that is, an SCI value) sent by a core network.

As described in the background, SCI values of services may be standardized, and these standardized SCI values are referred to as standard SCI values. For example, a standardized SCI value of an MSN service is 1; a standardized SCI value of a P2P service is 2; a standardized SCI value of a GAME service is 3, a standardized SCI value of a VOICE service is 4; and a standardized SCI value of an HTTP service is 5. A same standard SCI value represents a same service at different operators, for example, regardless of the China Mobile, the China Unicom, or the China Telecom, when the foregoing standard SCI value is 1, the standard SCI value represents the MSN service.

In addition, an operator may define SCI values of some services, and these SCI values may be referred to as private SCI values. For a same service, different operators may define different SCI values, for example, for an realtime game (realtimegame) service, an SCI value may be defined as 9 by American Telephone & Telegraph Company (At&t), and may be defined as 11 by the China Telecom (CMCC).

Optionally, the foregoing SCI value sent by the core network may include: a private SCI value and/or a standard SCI value.

Step 12: The access network control device acquires indication information of the core network.

Optionally, the foregoing indication information may include: receiving control signaling (or referred to as a message) or a packet that includes the indication information and is sent by the core network, and directly determining, according to the indication information included in the received control signaling or packet, whether a specific radio resource management function is to be enabled and an SCI value processing manner, where
the indication information may include at least one of the following items:
indication information of a specific radio resource management function, that is, indicating that a specific radio resource management function is to be enabled, or indicating that a specific radio resource management function is not to be enabled;
indication information of an SCI value using mode, that is, indicating that a private SCI value is to be used, or indicating that a standard SCI value is to be used; and
identification information of an SCI value, that is, indicating which processing manner table is to be used;
   or,
determining the indication information according to the SCI value and according to the SCI value sent by the core network, where, for example, when the SCI value sent by the core network is a private SCI value, it may be determined that a specific radio resource management function is to be enabled, and the private SCI value is to be used; and when the SCI value sent by the core network is a standard SCI value, it may be determined that a specific radio resource management function is to be enabled, and the standard SCI value is to be used.

In this embodiment of the present invention, the specific radio resource management function refers to an operation that is executed by an access network according to an SCI. In addition, the foregoing private SCI value refers to a private SCI value of a visited PLMN of an MS. For example, when the MS roams from the At&t to the CMCC, the private SCI value sent by the core network refers to a corresponding SCI value, mapped by At&t for a current service packet, of the CMCC; optionally, the foregoing private SCI value may be determined by a GGSN according to a configured correspondence table, and may also be determined by an SGSN according to a configured correspondence table, where the correspondence table is a correspondence table of private SCI values of different PLMNs having a roaming agreement.

Step 13: The access network control device processes a service packet according to the service class information and the indication information.

For example, when the indication information indicates that a specific radio resource management function is to be enabled and a private SCI value is to be used, the service packet is processed according to a private SCI value; or
when the indication information indicates that a specific radio resource management function is to be enabled and a private SCI value is not to be used, the service packet is processed according to a standard SCI value; or
when the indication information indicates that a specific radio resource management function is not to be enabled, a private SCI value and a standard SCI value may be ignored, and then, the service packet may be processed according to an existing procedure that is before specific radio resource management is to be enabled; or
processing is performed in a corresponding manner according to an indicated SCI value processing manner table.

The access network control device in this embodiment may be a BSC, a radio network controller (Radio Network Controller, RNC), an eNodeB, or the like. A terminal may be an MS, a user equipment (User equipment , UE) or the like. The subsequent embodiments use the BSC and the MS as examples.

A core network device that sends a private SCI value and a standard SCI value may send the private SCI value and the standard SCI value from a GGSN, and may also send the private SCI value and the standard SCI value from an SGSN.

According to this embodiment, a core network device sends related information to an access network control device, so that SCI values of a plurality of operators do not need to be configured on the access network control device, a configuration amount can be reduced, and the processing stability of an access network is improved; and the core network device may notify, by using indication information, the access network control device of whether a specific radio resource management function is to be enabled and/or an SCI value using mode, so that a service packet is correctly processed.

FIG. 2 is a schematic diagram of an application scenario according to an embodiment of the present invention. An MS, a BSC, an SGSN, and a GGSN are included, where an access network control device (for example, the BSC) is shared by PLMNs of three operators, that is, the China Telecom (CMCC), the China Mobile (TELECOM), and the China Unicom (UNICOM). It is assumed that the MS is a subscriber of the At&t, and the At&t has a roaming agreement with the CMCC; in this case, the MS moves to the foregoing network, that is, roams to a network of the CMCC, but the GGSN of the MS is still located on a home PLMN of the MS, that is, located on a PLMN of the At&t. The GGSN sends a downlink packet of a corresponding service to the BSC, and the BSC uses a corresponding processing manner for the packet according to an SCI value included in the packet, so that the BSC first needs to acquire the SCI value, and correctly identify the SCI value.

To achieve the foregoing objective, the present invention may use the following embodiment.

According to an aspect, the BSC may receive a standard SCI value and a private SCI value that are sent by a core network, receive indication information sent by the core network, and select the standard SCI value or the private SCI value according to the indication information, for processing.

According to another aspect, the BSC only receives a standard SCI value or a private SCI value that is sent by a core network, the core network does not send indication information, and the BSC selects the standard SCI value or the private SCI value according to an SCI value sending situation, for processing.

Descriptions are separately provided in the following.

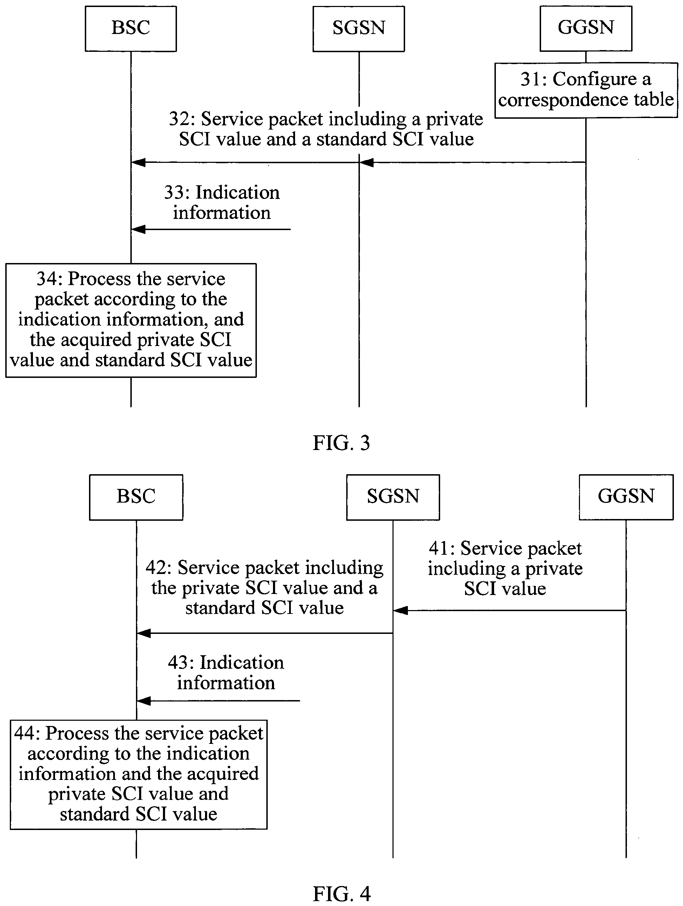

FIG. 3 is a schematic flowchart of a service packet processing method according to an embodiment of the present invention. This embodiment uses an example in which a core network sends an SCI value and indication information, and in this embodiment, SCI values of PLMNs of a plurality of operators are configured on a GGSN. Referring to FIG. 3, this embodiment includes:
Step 31: The GGSN acquires an SCI value, which belongs to a currently visited PLMN of a service currently performed by a UE, and a specific implementation form is not limited, for example, a correspondence table of private SCI values of different PLMNs having a roaming agreement may be configured on the GGSN.

For example, if the At&t has a roaming agreement with the China Telecom (CMCC), a correspondence table of private SCI values of the At&t and the CMCC may be configured. For the correspondence table, reference may be made to Table 1:

**Table 1**

| | | | | |
|---|---|---|---|---|
| At&t | 9 (realtimegame) | 10 | 11 | 12 |
| CMCC | 11 (realtimegame) | 12 | 13 | 14 |

In Table 1, each number represents an SCI value, and SCI values in upper and lower rows and in a same column represent a same service, for example, for a same service: an realtime game (realtimegame) service, a private SCI value of At&t is 9, but a private SCI value of CMCC is 11.

In addition, a standard SCI value does not need to be reconfigured, and each standard SCI value also corresponds to one service, for example, if 1 to 5 represent standard SCI values, a relationship between the standard SCI values and services represented by the standard SCI values may be shown in Table 2:

**Table 2**

| 1 | 2 | 3 | 4 | 5 |
|---|---|---|---|---|
| MSN | P2P | GAME | VOICE | HTTP |

Step 32: After packet transmission starts, the GGSN transfers a service packet to the BSC, where a private SCI value and a standard SCI value are included in a packet header of the service packet by the GGSN.

After a PDP context for a service is set up successfully, packet transmission may start.

The private SCI value included in the packet header of the packet refers to a private SCI value of a visited PLMN of an MS, for example, when an MS of the At&t roams to a CMCC network, a private SCI value that is included is a private SCI value of the CMCC, for example, for an realtime game service, a private SCI value that is included is "11".

In addition, an SCI value of a service class to which a current service belongs is selected from standardized service classes, for example, a realtime game may be classified into a GAME class, and it may be regarded that a standard SCI value corresponding to the realtime game is "3".

Therefore, the GGSN sends both "11" and "3" to the BSC.

If there is no SCI value corresponding to a current service class in standard service classes, a standard service class value similar to the current service class may be selected for processing. For example, if there is no GAME class, a P2P class may also be selected, and an SCI value=2; in this case, the GGSN sends both "11" and "2" to the BSC. Specifically, for how to correspond, configuration may be performed by an operator, and no detail is described herein.

Step 33: The BSC receives indication information sent by the core network.

The indication information may include at least one of the following items: indication information of a specific radio resource management function, indication information of a using mode of the service class information, and identification information of service class information.

The identification information of the SCI value may be an index for an SCI value processing manner table.

According to a schematic diagram of a network architecture shown in FIG. 2, the BSC is shared by a plurality of PLMNs, so that an SCI value processing manner table of each PLMN is configured on each BSC. As shown in FIG. 2, three SCI value processing manner tables of three PLMNs of the CMCC/UNICOM/TELECOM may be configured on the BSC. Therefore, the core network may indicate which mapping table is used by a current subscriber. A specific form is not limited. An SCI value processing manner table of each PLMN may be numbered, for example, the CMCC uses "1 ", the UNICOM uses "2", and the TELECOM uses "3", and therefore, the core network needs to indicate which table is used by the BSC for the current subscriber, for example, if a table index "1" is used, it indicates that the BSC needs to use the SCI value processing manner table of the CMCC.

Each SCI value processing manner table records a correspondence between an SCI value and a processing manner, so that processing is performed according to a determined SCI value. For example, for the SCI value processing manner table of the CMCC, reference may be made to Table 3.

**Table 3**

| | | | | |
|---|---|---|---|---|
| SCI value | 1 | 2 | 3 | 4 |
| Processing manner | Manner 1 | Manner 2 | Manner 3 | Manner 4 |

A processing manner corresponding to each SCI value may be defined by an operator itself, for example: in manner 1, a packet priority is the highest; in manner 2, a packet priority is the lowest; in processing manner 3, allocate two channels for a packet, ..., but a specific manner is not limited. When the indication information indicates that the SCI value processing manner table of the CMCC is used, and the determined SCI value is 1, a service packet is processed in manner 1. That is, the packet is processed with a top priority, and so on.

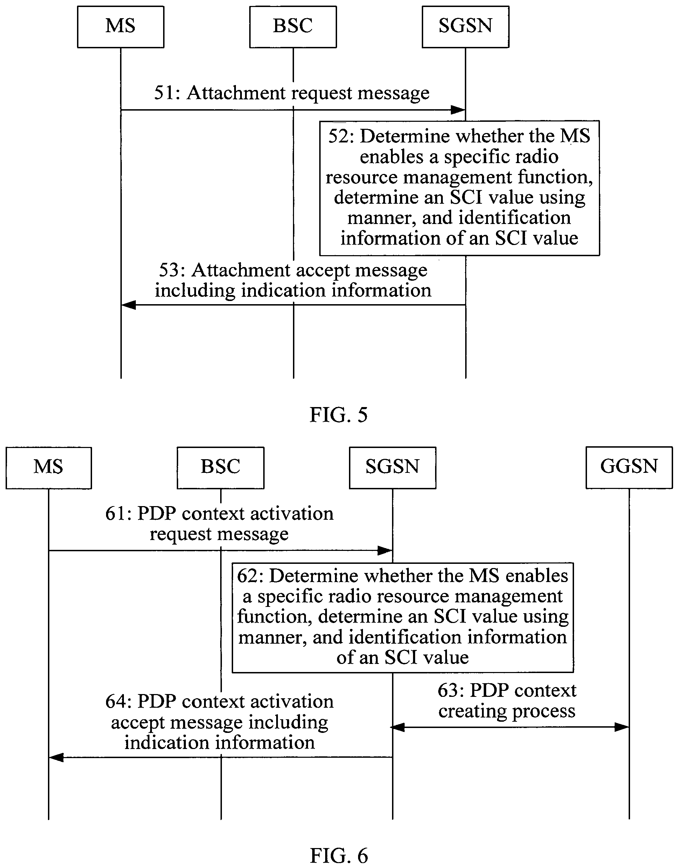

For specific content of acquiring the indication information, reference may be made to any one of subsequent embodiments shown in FIG. 5 to FIG. 8.

Step 34: The BSC processes the service packet according to the indication information, the acquired private SCI value and standard SCI value. A specific execution manner is not limited, for example, not limited to the following manners:

For example, if the received indication information indicates that a specific radio resource management function is to be enabled, and according to an indicated table, for example, a table of the CMCC is to be used, if it indicates that a private SCI value may be used, the BSC processes the service packet according to "11"; or
if the received indication information indicates a specific radio resource management function is to be enabled and a standard SCI value is to be used, the BSC processes the service packet according to "3"; or
if the received indication information indicates that a specific radio resource management function is not to be enabled, all SCI values (for example, "11" and "3") are ignored; or
if the BSC cannot identify an SCI value, a default SCI value may be selected for processing or the SCI value may be ignored, or processing may be performed according to a standard SCI value; or
if the BSC does not receive an indication about how an SCI value is to be used, the BSC may process a packet according to a default SCI value.

For example, if only an indication about that a specific radio resource management function is to be enabled is received, but the indication is not indicate an SCI value processing manner, processing may be performed according to a default SCI value; or if only an indication about which SCI value processing manner is to be used is received, but the indication is not determine an SCI value, processing may be performed according to a default SCI value or a standard SCI value, or the SCI value is ignored. Processing for a specific abnormal situation may be configured.

According to this embodiment, a BSC receives a private SCI value and a standard SCI value from a GGSN, and receives indication information, so that a large number of SCI values do not need to be configured on the BSC, so that a configuration amount is reduced, the stability of an access network is improved, and a packet can be correctly processed according to the indication information.

FIG. 4 is a schematic flowchart of a service packet processing method according to an embodiment of the present invention. This embodiment uses an example in which a core network sends an SCI value and indication information, and in this embodiment, SCI values of PLMNs of a plurality of operators are configured on an SGSN. Referring to FIG. 4, this embodiment includes:
Step 41: After packet transmission starts, a GGSN sends a service packet to the SGSN, where a private SCI value of a home PLMN of an MS is included in the packet header of the service packet by the GGSN.

For example, when the home PLMN of the MS is a PLMN of the At&t, and a packet is a packet of an realtime game service, the GGSN transfers the packet to the SGSN, where "9" is included in a packet header of the packet by the GGSN.

Step 42: The SGSN sends the service packet to a BSC, where a private SCI value and a standard SCI value of a visited PLMN of the MS are included in the packet header of the service packet by the SGSN according to a configured correspondence table.

In the previous embodiment, the correspondence table is configured on the GGSN, and similarly, in this embodiment, a correspondence table, as shown in Table 1, is configured on the SGSN.

The SGSN may obtain, according to Table 1, that the private SCI value of the visited PLMN is 11, and may also learn that the standard SCI value is 3, and therefore,the SGSN sends the packet to the BSC, where "11" and "3" are included in the packet header of the packet by the SGSN.

Step 43: The BSC receives indication information sent by a core network.

The indication information may include at least one of the following items:
indication information of a specific radio resource management function;
indication information of a using mode of the service class information; and
identification information of the service class information.

Step 44: The BSC processes the service packet according to the indication information and the acquired private SCI value and standard SCI value.

For specific content of steps 43 to 44, reference may be made to steps 33 to 34.

According to this embodiment, a BSC receives a private SCI value and a standard SCI value from an SGSN, and receives indication information, so that a large number of SCI values do not need to be configured on the BSC, a configuration amount is reduced, the stability of an access network is improved, and a packet can be correctly processed according to the indication information.

FIG. 5 is a schematic flowchart of indication information acquisition according to an embodiment of the present invention. This embodiment uses an example in which indication information is acquired in an attachment process. Referring to FIG. 5, this embodiment includes:
Step 51: An MS sends an attachment request message to an SGSN.
Step 52: The SGSN determines whether the MS enables a specific radio resource management function, determines an SCI value using mode, and identification information of an SCI value, and the SGSN may determine, according to a network configuration, for example, according to a PLMN to which the MS belongs and a visited PLMN, whether the MS can enable the specific radio resource management function and an SCI value processing manner. For example, a relationship table of all roaming PLMNs is configured on the SGSN, for example, it is not limited to that a relationship table of all PLMNs having a roaming relationship with the CMCC may be configured on the SGSN, for example, an MS of the At&t may use a specific radio resource management function, but another PLMN subscriber, for example, a VDF subscriber having a roaming agreement with the CMCC cannot use the specific radio resource management function, and so on. In addition, it may also be configured that an MS of which PLMNs may use a private SCI value, for example, it may be configured that an MS of the At&t may use the private SCI value, and an MS of a VDF cannot use the private SCI value.

The SGSN may determine, according to an International Mobile Subscriber Identity (International Mobile Subscriber Identity, IMSI) of a subscriber, a PLMN to which the current subscriber belongs, and may determine, according to a roaming agreement of the PLMN to which the current subscriber belongs, a visited PLMN on which the current subscriber is located, and the like. The IMSI may be carried in the attachment request message. For example, if it is determined, according to the IMSI, that a home PLMN of the current MS is a PLMN of the At&t, it is determined, according to a roaming agreement, that a visited PLMN is a PLMN of the CMCC, and a network configuration indicates that a subscriber of the At&t that roams to the CMCC can enable a specific radio resource management function and can use a private SCI value, the foregoing SGSN can obtain a result of the determining, which is that the MS can enable the specific radio resource management function and can use the private SCI value.

Step 53: The SGSN sends an attachment accept message to the MS, where the message includes indication information.

The indication information may include at least one of the following items: indication information of whether a specific radio resource management function is to be enabled, indication information of an SCI value processing manner, and identification information of a service class information SCI value.

For example, an RRM on identifier may be set in the attachment accept message, and is used to indicate whether the specific radio resource management function is to be enabled; and/or, a private SCI on identifier is set, and used to indicate an SCI value processing manner; and/or, a mapping table index value is included in the attachment accept message, and used to indicate which SCI value processing manner table is to be used. A specific manner is not limited.

FIG. 6 is a schematic flowchart of indication information acquisition according to an embodiment of the present invention. This embodiment uses an example in which indication information is acquired in a process of setting up a Packet Data Protocol (packet data protocol, PDP) context. Referring to FIG. 6, this embodiment includes:
Step 61: An MS sends a PDP context activation request message to an SGSN.
Step 62: The SGSN determines whether the MS enables a specific radio resource management function, determines an SCI value using mode, and identification information of an SCI value.

Similar to the method in the previous embodiment, the SGSN may determine, according to comprehensive information, such as configuration situations of a PLMN to which the current MS belongs and a currently visited PLMN, and information of an APN accessed by the current MS, whether the specific radio resource management function is to be enabled, the SCI value using mode, and the identification information of the SCI value.

Step 63: Initiate a process of creating a PDP context between the SGSN and the GGSN.

Step 64: The SGSN sends a PDP context activation accept message to the MS, where the message includes indication information. Alternatively, in a UTRAN system, an RNC is notified of the indication information in an RAB (Radio Access Bearer Setup, radio access bearer setup) process.

The indication information may include at least one of the following items: indication information of a specific radio resource management function, indication information of a using mode of the service class information, and identification information of service class information.

For example, an RRM ON identifier may be set in the PDP context activation accept message, and is used to indicate whether a specific radio resource management function is to be enabled; and/or, a private SCI on identifier is set, and used to indicate an SCI value using mode; and/or, a mapping table index value is included in the PDP context activation accept message, and used to indicate the identification information of the SCI value, that is, which SCI value processing manner table is to be used. A specific manner is not limited.

In an E-UTRAN system, in a PDN connection setup process, an MME notifies, by using a bearer setup request message, an eNodeB of the indication information. A specific manner is not limited.

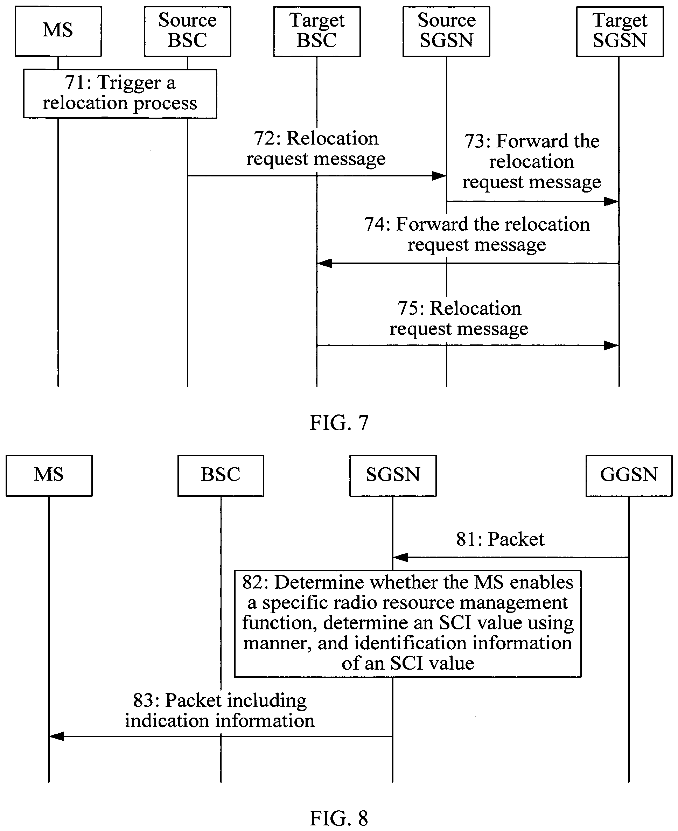

FIG. 7 is a schematic flowchart of indication information acquisition according to an embodiment of the present invention. This embodiment uses an example in which indication information is acquired in a handover process. Referring to FIG. 7, this embodiment includes:
Step 71: An MS and a source BSC trigger a relocation process.
Step 72: The source BSC sends a relocation request message to a source SGSN.
Step 73: The source SGSN forwards the relocation request message to a target SGSN.
Step 74: The target SGSN determines whether the MS enables a specific radio resource management function, determines an SCI value using mode, and identification information of an SCI value, and forwards the relocation request message to a target BSC.

Similar to that in the previous embodiment, the SGSN may perform the foregoing determining according to configuration situations of a home PLMN and a visited PLMN of the MS, for example, if PLMNs to which the target BSC and the source BSC belong are different, the SGSN may determine that the MS only uses a default SCI value on the target BSC, and cannot use a private SCI value on the target BSC, and so on.

The relocation request message includes indication information, where the indication information may include at least one of the following items: indication information of a specific radio resource management function, indication information of a using mode of the service class information, and identification information of service class information.

For example, an RRM ON identifier may be set in the relocation request message, and is used to indicate whether the specific radio resource management function is to be enabled; and/or, a private SCI on identifier is set, and used to indicate an SCI value processing manner; and/or, a mapping table index value is included in the relocation request message, and used to indicate which SCI value processing manner table is to be used. A specific manner is not limited.

Step 75: The target BSC sends a relocation request acknowledgement message to the target SGSN.

In FIG. 5 to FIG. 7, an example in which the indication information is included in control signaling is used, but the indication information may also be included in a packet.

In the present invention, only these processes are listed, but an access network may also be notified by a core network in another agreement process, which is, for example, but not limited to, that the access network is notified of the indication information in a radio bearer setup process of a service request process.

FIG. 8 is a schematic flowchart of indication information acquisition according to an embodiment of the present invention. This embodiment uses an example in which indication information is acquired from a packet. Referring to FIG. 8, this embodiment includes:
Step 81: An SGSN receives a packet sent by a GGSN.

The packet may be a packet including an SCI value, that is, a BSC subsequently processes a packet according to an SCI value and indication information that are included in a packet header of the packet.

Step 82: The SGSN determines whether the MS enables a specific radio resource management function, determines an SCI value using mode, and identification information of an SCI value.

Similar to that in the previous embodiment, the SGSN may determine, according to comprehensive information, such as configuration situations of a PLMN to which the current MS belongs and a currently visited PLMN, and APN information of access of the current MS, whether the specific radio resource management function is to be enabled, the SCI value using mode, and the identification information of the SCI value.

Step 83: The SGSN sends the packet to a BSC, where the indication information is included in a packet header of the packet by SGSN.

The indication information may include at least one of the following items: indication information of a specific radio resource management function, indication information of a using mode of the service class information, and identification information of service class information.

For example, a bit (bit) is used to indicate whether the specific radio resource management function is to be enabled, and another bit (bit) is used to indicate the SCI value using mode. Alternatively, another two bits are added to indicate which SCI value processing manner table is to be used by the BSC. A specific manner is not limited.

This embodiment shown above uses an example in which an SCI value is sent, and indication information is sent. Optionally, according to the present invention, the indication information may not be sent, and the indication information is determined according to an SCI value sending situation.

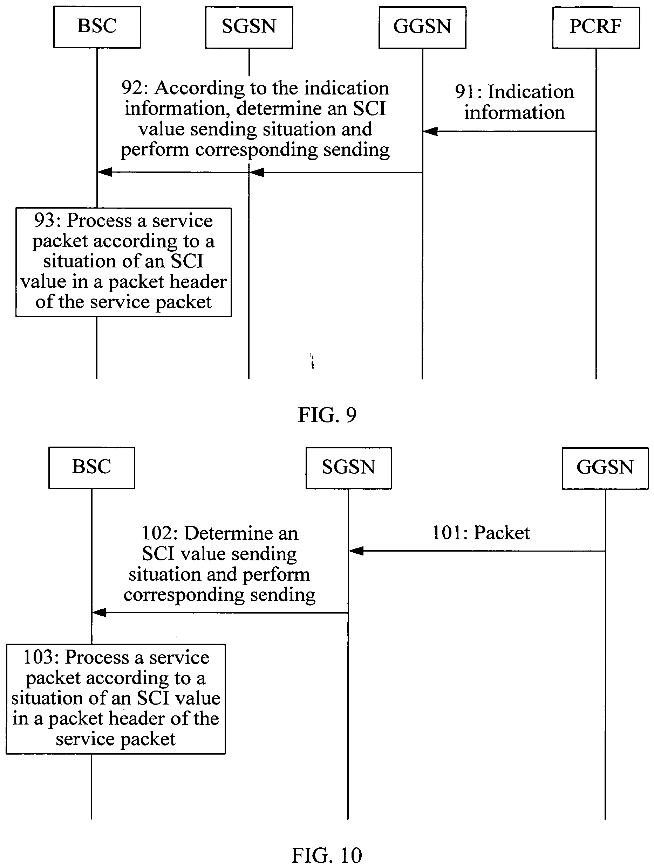

FIG. 9 is a schematic flowchart of a service packet processing method according to an embodiment of the present invention. In this embodiment, a core network does not send indication information to an access network. Referring to FIG. 9, this embodiment includes:
Step 91: A PCRF sends indication information to a GGSN.

The policy and charging rules function unit (Policy Charging Rule Function, PCRF) is a functional entity that formulates a charging rule, QoS, and the like. In this case, the PCRF may formulate whether a specific radio resource management function is to be enabled and an SCI value using mode.

When a PDP context is set up, the PCRF sends an IP-CAN session modification acknowledgement message to the GGSN, where the message includes indication information, and the indication information is used to indicate whether the specific radio resource management function is to be enabled and the SCI value using mode.

Step 92: The GGSN determines an SCI value sending situation according to the indication information, and performs corresponding sending.

For example, if the indication information indicates that the specific radio resource management function is not allowed to be enabled, an SCI value is not included in a packet by the GGSN; or
if the indication information indicates that the specific radio resource management function is allowed to be enabled and a private SCI value is used, the private SCI value is included in a packet by the GGSN; or
if the indication information indicates that the specific radio resource management function is allowed to be enabled and a standard SCI value is used, the standard SCI value in included in a packet by the GGSN.

Step 93: A BSC processes a service packet according to a situation of an SCI value in a packet header of the service packet.

For example, if the service packet does not include an SCI value, the specific radio resource management function is not to be enabled; or
if the service packet includes a private SCI value, the service packet is processed according to the private SCI value; or
if the service packet includes a standard SCI value, the service packet is processed according to the standard SCI value; or
if the service packet includes an SCI value, but the BSC cannot identify the SCI value, the service packet may be processed according to a default SCI value.

According to this embodiment, a BSC receives an SCI value from a GGSN, and determines, according to an SCI value receiving situation, indication information, so that a large number of SCI values do not need to be configured on the BSC, a configuration amount is reduced, the stability of an access network is improved, and a packet can be correctly processed according to the indication information.

FIG. 10 is a schematic flowchart of a service packet processing method according to an embodiment of the present invention. In this embodiment, indication information is not sent. Referring to FIG. 10, this embodiment includes:
Step 101: After packet transmission starts, a GGSN sends a service packet to an SGSN, where a private SCI value of a home PLMN of an MS is included in a packet header of the service packet by the GGSN.

For example, when the home PLMN of the MS is a PLMN of the At&t, and a packet is a packet of an realtime game service, the GGSN transfers the packet to the SGSN, where "9" is included in a packet header of the packet by the GGSN,.

Step 102: The SGSN determines whether a specific radio resource management function is to be enabled and an SCI value using mode, determines an SCI value sending situation according to a result of the determining, and performs corresponding sending.

Attachment of the MS has been completed during packet transmission, and during the attachment of the MS, configuration situations of the home PLMN and a visited PLMN of the MS can be learned. Then, the foregoing determining may be performed according to the configuration situations.

For example, if the result of the determining is that the specific radio resource management function is not allowed to be enabled, an SCI value is not included in the packet by the SGSN; or
if the result of the determining is that the specific radio resource management function is allowed to be enabled and a private SCI value is used, the private SCI value is included in the packet by the SGSN; or
if the result of the determining is that the specific radio resource management function is allowed to be enabled and a standard SCI value is used, the standard SCI value is included in the packet by the SGSN.

Step 103: A BSC processes the service packet according to a situation of the SCI value in the packet header of the service packet.

For specific content of step 103, reference may be made to step 93.

According to this embodiment, a BSC receives an SCI value from an SGSN, and determines, according to an SCI value receiving situation, indication information, so that a large number of SCI values do not need to be configured on the BSC, a configuration amount is reduced, the stability of an access network is improved, and a packet can be correctly processed according to the indication information.

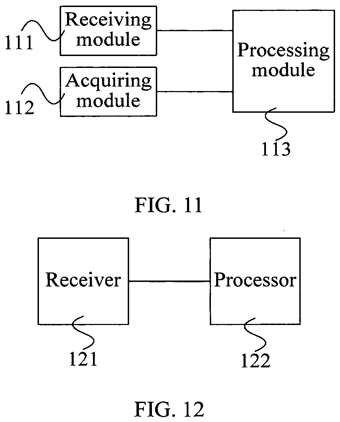

FIG. 11 is a schematic structural diagram of a service packet processing device according to an embodiment of the present invention. The device may be located on an access network, and the device includes a receiving module 111, an acquiring module 112, and a processing module 113, where the receiving module 111 is configured to receive service class information sent by a core network, and send the service class information to the processing module; the acquiring module 112 is configured to acquire indication information of the core network, and send the indication information to the processing module; and the processing module 113 is configured to receive the service class information sent by the receiving module and the indication information sent by the acquiring module, and process a service packet of a user equipment according to the service class information and the indication information.

Optionally, the service class information received by the receiving module includes: private service class information and/or standard service class information.

Optionally, the private service class information in the service class information received by the receiving module is: service class information that corresponds to a visited PLMN on which the user equipment is located and is acquired by a gateway device, or service class information that corresponds to a visited PLMN on which the user equipment is located and is acquired by a mobility management network element, where the visited PLMN is different from a home PLMN of the user equipment. The gateway device is a GGSN or a P-GW, and the mobility management network element is an SGSN or an MME.

Optionally, the acquiring module is specifically configured to:
receive a message that includes the indication information and is sent by the core network and extract the indication information, or extract the indication information included in the service packet, where the indication information includes at least one of the following items:
   indication information of a specific radio resource management function;
   indication information of a using mode of the service class information; and
   identification information of the service class information.

Optionally, the acquiring module is specifically configured to:
in an attachment process, receive the message that includes the indication information and is sent by the mobility management network element; or in a bearer setup process, receive the message that includes the indication information and is sent by the mobility management network element; or
in a handover process, receive the message that includes the indication information and is sent by a target mobility management network element; or receive the service packet sent by the mobility management network element, where a packet header of the service packet includes the indication information.

Optionally, the acquiring module is specifically configured to acquire the indication information from a packet header of the service packet, where the service packet is sent by the mobility management network element, and the packet header of the service packet includes the indication information.

Optionally, the receiving module is specifically configured to: receive the service packet sent by the core network, where a packet header of the service packet includes an SCI value, and send the SCI value to the processing module and the determining module; and
the acquiring module is specifically configured to receive the SCI value sent by the receiving module, determine the indication information according to the SCI value, and process the service packet according to the SCI value and the indication information.

Optionally, the acquiring module is specifically configured to:
if the SCI value is a private SCI value, enable a specific radio resource management function and use the private SCI value to process the service packet; or
if the SCI value is a standard SCI value, enable a specific radio resource management function and use the standard SCI value to process the service packet.

The processing device shown in FIG. 11 may execute processing steps executed by the corresponding access network control device or BSC in FIG. 1 to FIG. 10. For description of functions of modules in FIG. 11, reference may be made to description in the method embodiment of the present invention.

According to this embodiment, an SCI value sent by a core network is received, so that SCI values of a plurality of operators do not need to be configured on an access network control device, a configuration amount is reduced, and the stability of an access network is improved; and indication information of the core network is determined, and how a service packet is processed can be learned according to the indication information, so that the service packet is correctly processed.

FIG. 12 is a schematic structural diagram of an access network control device according to an embodiment of the present invention. The device may be a BSC, an RNC, an eNodeB, or the like, and the device includes a receiver 121 and a processor 122, where the receiver 121 is configured to receive service class information sent by a core network; and the processor 122 is configured to acquire indication information of the core network, and process a service packet of a user equipment according to the service class information and the indication information.

Optionally, the service class information received by the receiver includes: private service class information and/or standard service class information.

Optionally, the private service class information received by the receiver is: service class information that corresponds to a visited PLMN on which the user equipment is located and is acquired by a gateway device, or service class information that corresponds to a visited PLMN on which the user equipment is located and is acquired by a mobility management network element, where the visited PLMN is different from a home PLMN of the user equipment.

Optionally, the receiver is further configured to receive a message that includes the indication information and is sent by the core network and extract the indication information, or extract the indication information included in the service packet, where the indication information includes at least one of the following items: indication information of a specific radio resource management function, indication information of a using mode of the service class information, and identification information of the service class information; and
the processor is specifically configured to determine the indication information of the core network according to control signaling sent by the core network or the service packet, and process the service packet according to the service class information and the indication information.

Optionally, the receiver is specifically configured to:
receive the service class information sent by the core network, and
in an attachment process, receive the message that includes the indication information and is sent by the mobility management network element; or in a bearer setup process, receive the message that includes the indication information and is sent by the mobility management network element; or in a handover process, receive the message that includes the indication information and is sent by a target mobility management network element.

Optionally, the receiver is specifically configured to:
receive the service class information sent by the core network, and
receive the service packet, where the service packet is sent by the mobility management network element, and a packet header of the service packet includes the indication information.

Optionally, the receiver is specifically configured to receive the service packet sent by the core network, where a packet header of the service packet includes the SCI value; and
the processor is specifically configured to determine the indication information of the core network according to the SCI value included in the packet header of the service packet, and process the service packet according to the SCI value and the indication information.

Optionally, the processor is specifically configured to:
if the SCI value is a private SCI value, enable a specific radio resource management function and use the private SCI value to process the service packet; or
if the SCI value is a standard SCI value, enable a specific radio resource management function and use the standard SCI value to process the service packet.

The processing device shown in FIG. 12 may execute processing steps executed by the corresponding access network control device or BSC in FIG. 1 to FIG. 10. For description of functions of modules in FIG. 12, reference may be made to description in the method embodiment of the present invention.

According to this embodiment, an SCI value sent by a core network is received, so that SCI values of a plurality of operators do not need to be configured on an access network control device, a configuration amount is reduced, and the stability of an access network is improved; and indication information of the core network is determined, and how a service packet is processed can be learned according to the indication information, so that the service packet is correctly processed.

Persons of ordinary skill in the art may understand that all or a part of the steps of the method embodiments may be implemented by a program instructing relevant hardware. The program may be stored in a computer readable storage medium. When the program runs, the steps of the method embodiments are performed. The foregoing storage medium includes any medium that can store program code, such as a ROM, a RAM, a magnetic disk, or an optical disc.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, as long as these modifications or replacements do not cause the essence of corresponding technical solutions to depart from the scope of the technical solutions of the embodiments of the present invention.

## Claims

1. A service packet processing method for enabling a roaming user equipment to communicate with a visited network, comprising:
sending (32), by a core network (SGSN, GGSN), service class information, SCI, of a mobile station, MS; wherein the SCI comprises at least one of the following: private SCI, and standard SCI; wherein the private SCI is SCI that corresponds to a visited PLMN on which the MS is located, wherein the visited PLMN is different from a home PLMN of the MS;
determining, by the core network (SGSN, GGSN), whether the MS enables a specific radio resource management function, a using mode of the SCI, and identification information of the SCI;
sending (33), by the core network (SGSN, GGSN), indication information to an access network control device (BSC) for the access network control device processing a service packet of the MS according to the SCI and the indication information; wherein
the indication information includes at least one of the following items: indication information of a specific radio resource management function, indication information of the using mode of the SCI, and identification information of SCI; wherein the indication information of a specific radio resource management function indicates that a specific radio resource management function is to be enabled or indicates that a specific radio resource management function is not to be enabled; wherein the indication information of the using mode of the SCI indicates that a private SCI value is to be used or indicates that a standard SCI is to be used.

2. The method according to claim 1, wherein the sending, by the core network (SGSN, GGSN), indication information to an access network control device (BSC) comprises:
sending, by the core network, a message that includes the indication information in an attachment process; or
sending, by the core network, a message that includes the indication information in a bearer setup process; or
sending, by the core network, a message that includes the indication information in a handover process.

3. A core network (SGSN, GGSN) for processing service packets of roaming user equipment, comprising:
means for sending (32) service class information, SCI, of an mobile station, MS; wherein the SCI comprises at least one of the following: private SCI, and standard SCI; wherein the private SCI is SCI that corresponds to a visited PLMN on which the MS is located, wherein the visited PLMN is different from a home PLMN of the MS;
means for determining whether the MS enables a specific radio resource management function, a using mode of the SCI, and identification information of the SCI;
means for sending (33) indication information to an access network control device (BSC) for the access network control device processing a service packet of the MS according to the SCI and the indication information; wherein
the indication information includes at least one of the following items: indication information of a specific radio resource management function, indication information of the using mode of the SCI, and identification information of SCI; wherein the indication information of a specific radio resource management function indicates that a specific radio resource management function is to be enabled or indicates that a specific radio resource management function is not to be enabled; wherein the indication information of the using mode of the SCI indicates that a private SCI value is to be used or indicates that a standard SCI is to be used.

4. The core network (SGSN, GGSN) according to claim 3, wherein means for sending indication information to an access network control device (BSC) for the access network control device processing a service packet of the MS according to the SCI and the indication information is configured to:
send a message that includes the indication information in an attachment process; or
send a message that includes the indication information in a bearer setup process; or
send a message that includes the indication information in a handover process.

## Patentansprüche

1. Dienstpaketverarbeitungsverfahren, damit einem roamenden Benutzergerät ermöglicht wird, mit einem besuchten Netzwerk zu kommunizieren, umfassend:
Senden (32), durch ein Kernnetz (SGSN, GGSN), von Dienstklasseninformationen, SCI, einer Mobilstation, MS; wobei die SCI private SCI und/oder Standard-SCI umfassen; wobei die privaten SCI SCI sind, die einem besuchten PLMN, auf dem sich die MS befindet, entsprechen, wobei sich das besuchte PLMN von einem Heimat-PLMN der MS unterscheidet;
Bestimmen, durch das Kernnetz (SGSN, GGSN), ob die MS eine spezifische Funkressourcenverwaltungsfunktion, einen Verwendungsmodus der SCI und Identifikationsinformationen der SCI ermöglicht;
Senden (33), durch das Kernnetz (SGSN, GGSN), von Indikationsinformationen zu einer Zugangsnetzsteuereinrichtung (BSC), damit die Zugangsnetzsteuereinrichtung ein Dienstpaket der MS gemäß den SCI und den Indikationsinformationen verarbeitet; wobei
die Indikationsinformationen Indikationsinformationen einer spezifischen Funkressourcenverwaltungsfunktion und/oder Indikationsinformationen des Verwendungsmodus der SCI und/oder Identifikationsinformationen der SCI beinhalten; wobei die Indikationsinformationen einer spezifischen Funkressourcenverwaltungsfunktion angeben, dass eine spezifische Funkressourcenverwaltunsgfunktion aktiviert werden soll oder dass eine spezifische Funkressourcenverwaltungsfunktion nicht aktiviert werden soll; wobei die Indikationsinformationen des Verwendungsmodus der SCI angeben, dass ein privater SCI-Wert verwendet werden soll oder dass Standard-SCI verwendet werden sollen.

2. Verfahren nach Anspruch 1, wobei das Senden, durch das Kernnetz (SGSN, GGSN), von Indikationsinformationen zu einer Zugangsnetzsteuereinrichtung (BSC) Folgendes umfasst:
Senden, durch das Kernnetz, einer Nachricht, die die Indikationsinformationen beinhaltet, in einem Anschlussprozess oder
Senden, durch das Kernnetz, einer Nachricht, die die Indikationsinformationen beinhaltet, in einem Trägereinrichtungsprozess oder
Senden, durch das Kernnetz, einer Nachricht, die die Indikationsinformationen beinhaltet, in einem Übergabeprozess.

3. Kernnetz (SGSN, GGSN) zum Verarbeiten von Dienstpaketen eines roamenden Benutzergeräts, umfassend:
Mittel zum Senden (32) von Dienstklasseninformationen, SCI, einer Mobilstation, MS; wobei die SCI private SCI und/oder Standard-SCI umfassen; wobei die privaten SCI SCI sind, die einem besuchten PLMN, auf dem sich die MS befindet, entsprechen, wobei sich das besuchte PLMN von einem Heimat-PLMN der MS unterscheidet;
Mittel zum Bestimmen, ob die MS eine spezifische Funkressourcenverwaltungsfunktion, einen Verwendungsmodus der SCI und Identifikationsinformationen der SCI ermöglicht;
Mittel zum Senden (33) von Indikationsinformationen zu einer Zugangsnetzsteuereinrichtung (BSC), damit die Zugangsnetzsteuereinrichtung ein Dienstpaket der MS gemäß den SCI und den Indikationsinformationen verarbeitet; wobei
die Indikationsinformationen Indikationsinformationen einer spezifischen Funkressourcenverwaltungsfunktion und/oder Indikationsinformationen des Verwendungsmodus der SCI und/oder Identifikationsinformationen der SCI beinhalten; wobei die Indikationsinformationen einer spezifischen Funkressourcenverwaltungsfunktion angeben, dass eine spezifische Funkressourcenverwaltungsfunktion aktiviert werden soll oder dass eine spezifische Funkressourcenverwaltungsfunktion nicht aktiviert werden soll; wobei die Indikationsinformationen des Verwendungsmodus der SCI angeben, dass ein privater SCI-Wert verwendet werden soll oder dass Standard-SCI verwendet werden sollen.

4. Kernnetz (SGSN, GGSN) nach Anspruch 3, wobei das Mittel zum Senden von Indikationsinformationen zu einer Zugangsnetzsteuereinrichtung (BSC), damit die Zugangsnetzsteuereinrichtung ein Dienstpaket der MS gemäß den SCI und den Indikationsinformationen verarbeitet, konfiguriert ist zum:
Senden einer Nachricht, die die Indikationsinformationen beinhaltet, in einem Anschlussprozess oder
Senden einer Nachricht, die die Indikationsinformationen beinhaltet, in einem Trägereinrichtungsprozess oder
Senden einer Nachricht, die die Indikationsinformationen beinhaltet, in einem Übergabeprozess.

## Revendications

1. Procédé de traitement de paquets de services permettant d'autoriser un équipement utilisateur itinérant à communiquer avec un réseau visité, comprenant :
l'envoi (32), par un réseau central (noeud SGSN, noeud GGSN), d'informations de classe de service, SCI, d'une station mobile, MS dans lequel
les informations SCI comprennent au moins l'un des éléments suivants : des informations SCI privées et des informations SCI standard, les informations SCI privées étant des informations SCI qui correspondent à un réseau mobile terrestre public, PLMN, visité sur lequel la station mobile MS est située, le réseau PLMN visité étant différent d'un réseau PLMN de rattachement de la station mobile MS,
la détermination, par le réseau central (noeud SGSN, noeud GGSN), du fait que la station mobile MS autorise ou non une fonction spécifique de gestion de ressources radio, un mode d'utilisation des informations SCI et des informations d'identification des informations SCI,
l'envoi (33) par le réseau central (noeud SGSN, noeud GGSN) d'informations d'indication vers un dispositif de contrôle de réseau d'accès (contrôleur de station de base, BSC) pour le dispositif de contrôle de réseau d'accès traitant un paquet de service de la station mobile MS en fonction des informations SCI et des informations d'indication, dans lequel
les informations d'indication incluent au moins l'un des éléments suivants : les informations d'indication d'une fonction spécifique de gestion de ressources radio, les informations d'indication du mode d'utilisation des informations SCI et les informations d'identification des informations SCI, les informations d'indication d'une fonction spécifique de gestion de ressources radio indiquant qu'une fonction spécifique de gestion de ressources radio doit être activée ou bien indiquant qu'une fonction spécifique de gestion de ressources radio ne doit pas être activée, les informations d'indication du mode d'utilisation des informations SCI indiquant qu'une valeur d'informations SCI privées doit être utilisée ou bien indiquant que des informations SCI standard doivent être utilisées.

2. Procédé selon la revendication 1, dans lequel l'envoi, par le réseau central (noeud SGSN, noeud GGSN), d'informations d'indication à un dispositif de contrôle de réseau d'accès (contrôleur BSC) comprend :
l'envoi, par le réseau central, d'un message qui inclut les informations d'indication dans un processus d'attachement, ou
l'envoi, par le réseau central, d'un message qui inclut les informations d'indication dans un processus d'établissement de support, ou
l'envoi, par le réseau central, d'un message qui inclut les informations d'indication dans un processus de transfert de communication.

3. Réseau central (noeud SGSN, noeud GGSN) destiné à traiter des paquets de service d'un équipement utilisateur itinérant, comprenant :
un moyen d'envoi (32) d'informations de classe de services, SCI, d'une station mobile, MS, les informations SCI comprenant au moins l'un des éléments suivants : des informations SCI privées et des informations SCI standard, les informations SCI privées étant des informations SCI qui correspondent à un réseau mobile terrestre public, PLMN, visité sur lequel la station mobile MS est située, le réseau PLMN visité étant différent d'un réseau PLMN de rattachement de la station mobile MS,
un moyen de détermination du fait que la station mobile MS autorise ou non une fonction spécifique de gestion de ressources radio, un mode d'utilisation des informations SCI et des informations d'identification des informations SCI,
un moyen d'envoi (33) d'informations d'indication vers un dispositif de contrôle de réseau d'accès (contrôleur de station de base, BSC) pour le dispositif de contrôle de réseau d'accès traitant un paquet de service de la station mobile MS en fonction des informations SCI et des informations d'indication, dans lequel
les informations d'indication incluent au moins l'un des éléments suivants : les informations d'indication d'une fonction spécifique de gestion de ressources radio, les informations d'indication du mode d'utilisation des informations SCI et les informations d'identification des informations SCI, les informations d'indication d'une fonction spécifique de gestion de ressources radio indiquant qu'une fonction spécifique de gestion de ressources radio doit être activée ou bien indiquant qu'une fonction spécifique de gestion de ressources radio ne doit pas être activée, les informations d'indication du mode d'utilisation des informations SCI indiquant qu'une valeur d'informations SCI privées doit être utilisée ou bien indiquant que des informations SCI standard doivent être utilisées.

4. Réseau central (noeud SGSN, noeud GGSN) selon la revendication 3, dans lequel le moyen d'envoi d'informations d'indication à un dispositif de contrôle de réseau d'accès (contrôleur BSC), pour le dispositif de contrôle de réseau d'accès traitant un paquet de service de la station mobile MS en fonction des informations SCI et des informations d'indication, est configuré pour :
envoyer un message qui inclut les informations d'indication dans un processus d'attachement, ou
envoyer un message qui inclut les informations d'indication dans un processus d'établissement de support, ou
envoyer un message qui inclut les informations d'indication dans un processus de transfert de communication.
